(19)

Europäisches
Patentamt
European
Patent Office
Office européen
des brevets

(11) **EP 4 523 958 A1**

(12) **EUROPEAN PATENT APPLICATION**

(43) Date of publication:
**19.03.2025 Bulletin 2025/12**

(21) Application number: **24199718.8**

(22) Date of filing: **11.09.2024**

(51) International Patent Classification (IPC):
**B60L 58/24** (2019.01)

(52) Cooperative Patent Classification (CPC):
**B60L 58/24;** B60L 2240/34; B60L 2240/36;
B60L 2240/545; B60L 2240/622; B60L 2240/662;
B60L 2240/68; B60L 2240/80

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.09.2023 CN 202311182749**

(71) Applicant: **Volvo Car Corporation
405 31 Göteborg (SE)**

(72) Inventor: **MA, Yawei
Shanghai (CN)**

(74) Representative: **Maiwald GmbH
Engineering
Elisenhof
Elisenstrasse 3
80335 München (DE)**

(54) **METHOD, APPARATUS, AND COMPUTER-READABLE STORAGE MEDIUM FOR VEHICLE THERMAL MANAGEMENT**

(57) The present disclosure provides methods, apparatus, and computer-readable storage media for vehicle thermal management. The method includes: determining whether a vehicle traveling mode complies with a requirement of a thermal management mode according to vehicle navigation data and/or a vehicle traveling state; acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode; thermally managing the thermal management component of the vehicle in accordance with the acquired ambient temperature, the upper temperature limit and the lower temperature limit of the thermal management component, and in combination with the estimated remaining traveling distance and/or remaining traveling time.

| S101 | Determining whether a vehicle traveling mode complies with a requirement of a thermal management mode according to vehicle navigation data and/or a vehicle traveling state |
|---|---|

| S102 S103 | Acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode |
|---|---|

| | Thermally managing the thermal management component of the vehicle in accordance with the acquired ambient temperature, the upper temperature limit and the lower temperature limit of the thermal management component, and in combination with the estimated remaining traveling distance and/or remaining traveling time |
|---|---|

Fig. 1

EP 4 523 958 A1

**Description**

CROSS-REFERENCE TO RELATED APPLICATION

The present disclosure claims the benefit of priority of co-pending Chinese Patent Application No. 202311182749.8, filed on September 13, 2023, and entitled "METHOD, APPARATUS, AND COMPUTER-READABLE STORAGE MEDIUM FOR VEHICLE THERMAL MANAGEMENT".

TECHNICAL FIELD

The present disclosure relates to the field of vehicles, and more particularly, to a method, apparatus, and computer-readable storage medium of vehicle thermal management.

BACKGROUND

With the increasing popularity of vehicles, particularly new energy vehicles, the importance of thermal management of vehicles is increasingly significant. Increased efficiency in thermal management of a vehicle will have a direct impact on the actual usage of the vehicle user, particularly the energy consumption and endurance performance of vehicles in high and low temperature environments.

Existing vehicle thermal management techniques, such as heating and cooling of the battery, control of the cockpit temperature, are thermal control based on the input temperature, and main parameters to be considered include, for example, the temperature of the battery cell, the ambient temperature, and the cockpit set temperature. Further, the goal of thermal control for each component is fixed and does not take into account the actual application scenario of the user, resulting in additional consumption and waste of energy in some scenarios. Taking high voltage battery cooling for new energy vehicles as an example, the cell temperature of a ternary lithium battery typically needs to be controlled between 25°C and 35°C from a lifetime point of view, and once the cell temperature rises and reaches a threshold value, cooling of the battery is triggered so that the battery cools directly towards a set target temperature (e.g., 25°C). However, this target temperature does not take into account the influence of specific application scenario, such as the distance, time which the user is expected to travel when using the vehicle, and environmental factors of the outside, so that it often occurs that the user arrives at the destination and stops using the vehicle during or after the end of the cooling of the battery, and if the ambient temperature is higher than the set cooling target temperature, then the battery cell temperature gradually rises back to the ambient temperature, thereby causing the energy consumed by the thermal management of the vehicle during the cooling of the battery to do a part of the useless work, resulting in unnecessary consumption of the energy source.

Accordingly, there is a need for a vehicle thermal management technique that provides timely and efficient thermal management of the vehicle and minimizes excessive energy consumption.

SUMMARY

According to one aspect of the present disclosure, there is provided a method of vehicle thermal management, including: determining whether a vehicle traveling mode complies with a requirement of a thermal management mode according to vehicle navigation data and/or a vehicle traveling state; acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode; thermally managing the thermal management component of the vehicle in accordance with the acquired ambient temperature, the upper temperature limit and the lower temperature limit of the thermal management component, and in combination with the estimated remaining traveling distance and/or remaining traveling time.

According to another aspect of the present disclosure, there is provided an apparatus for thermal management of a vehicle, comprising: a determining unit configured to determine whether a vehicle traveling mode complies with a requirement of a thermal management mode according to vehicle navigation data and/or a vehicle traveling state; an acquiring unit configured to acquire an ambient temperature and an upper temperature limit and a lower temperature limit of a thermal management component in the thermal management mode, and estimate a remaining traveling distance and/or a remaining traveling time of a vehicle from a destination when the vehicle traveling mode is determined to comply with the requirement of the thermal management mode; a management unit configured to thermally manage the thermal management component of the vehicle in accordance with the acquired ambient temperature, the upper temperature limit and the lower temperature limit of the thermal management component, and in combination with the estimated remaining traveling distance and/or remaining traveling time.

According to yet another aspect of the present disclosure, there is provided an apparatus of vehicle thermal management, comprising: a memory having computer instructions stored thereon; and a processor, wherein the instructions, when executed by the processor, cause the processor to perform steps of: determining whether a vehicle traveling mode complies with a requirement of a thermal management mode according to vehicle navigation data and/or a vehicle traveling state; acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode; thermally managing the thermal management component of the vehicle in accordance with the acquired ambient temperature, the upper temperature limit and the lower temperature limit of the thermal management component, and in combination with the estimated remaining traveling distance and/or remaining traveling time.

According to yet another aspect of the present disclosure, there is provided a non-transitory computer-readable storage medium storing instructions that cause a processor to perform steps of: determining whether a vehicle traveling mode complies with a requirement of a thermal management mode according to vehicle navigation data and/or a vehicle traveling state; acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode; thermally managing the thermal management component of the vehicle in accordance with the acquired ambient temperature, the upper temperature limit and the lower temperature limit of the thermal management component, and in combination with the estimated remaining traveling distance and/or remaining traveling time.

According to the method, apparatus, and computer-readable storage medium for vehicle thermal management provided in the above-described aspects of the present disclosure, it is possible to determine whether the thermal management mode is compliant by determining the vehicle traveling mode, and in the thermal management mode, a thermal management manner of a vehicle is flexibly adjusted by combining an ambient temperature, a remaining traveling distance and/or a traveling time of the vehicle, thereby reducing energy consumption and improving efficiency of thermal management of the vehicle.

BRIEF DESCRIPTION OF DRAWINGS

These and/or other aspects and advantages of the disclosure will become more apparent and more readily appreciated from the following detailed description of the embodiments of the disclosure, taken in conjunction with the accompanying drawings:

Fig. 1 shows a flow chart of a method of vehicle thermal management according to an embodiment of the invention;
Fig. 2 shows an example of a hardware configuration of a whole vehicle controller according to an example of an embodiment of the present invention;
Fig. 3 shows a schematic diagram of a historical traveling trajectory curve according to an example of an embodiment of the present invention;
Fig. 4 shows a block diagram of an apparatus for vehicle thermal management according to an embodiment of the present invention;
Fig. 5 shows a block diagram of an apparatus for vehicle thermal management according to an embodiment of the present invention;
Fig. 6 shows a block diagram of an apparatus for vehicle thermal management according to an embodiment of the present invention.

DETAILED DESCRIPTION

In order for those skilled in the art to better understand the present disclosure, the present disclosure is further described in detail below in conjunction with the accompanying drawings and the detailed implementation.

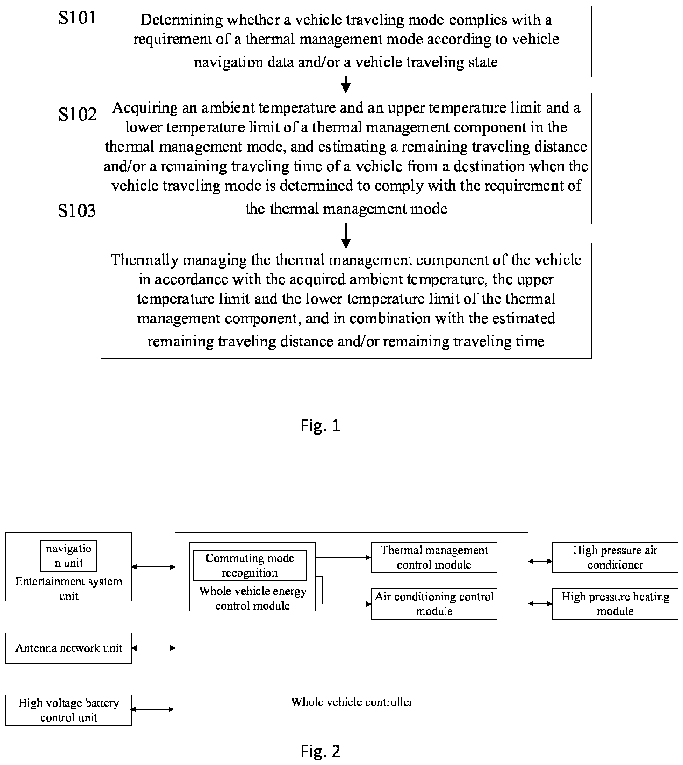

Fig. 1 shows a flow diagram of a method 100 of vehicle thermal management according to an embodiment of the invention. A method of vehicle thermal management according to an embodiment of the present invention is described below with reference to Fig. 1. The thermal management component to which the vehicle thermal management method according to embodiments of the present invention is directed may be any component of a vehicle, in particular, a component of a vehicle that is sensitive to temperature or that is susceptible to temperature-affected performance. For example, the thermal management component of the vehicle in the embodiment of the present invention may be various components of a power battery (high-voltage battery) of the vehicle, a cockpit of the vehicle, an engine of the vehicle, and the like, which are not limited herein.

In step S101, determining whether a vehicle traveling mode complies with a requirement of a thermal management mode according to the vehicle navigation data and/or the vehicle traveling state.

In one example, when the vehicle navigation data can be acquired, it is possible to acquire various kinds of information directly through the vehicle navigation data, such as a departure place, a destination, a traveling trajectory, a traffic situation of the vehicle, etc., to further estimate a remaining traveling distance and/or a remaining traveling time of the vehicle to the destination, etc. Thus, in this case, when the remaining traveling distance and/or the remaining traveling time of the vehicle can be estimated from the vehicle navigation data, it can be determined that the vehicle traveling mode complies with the requirements of the thermal management mode.

In another example, whether the vehicle traveling mode complies with the requirements of the thermal management mode may also be determined by constructing a fixed traveling trajectory model of the vehicle. Alternatively, one or more fixed traveling trajectories of the vehicle may be acquired from an analysis of a plurality of historical traveling trajectories of the vehicle, and a fixed traveling trajectory model of the vehicle may be constructed using the one or more fixed traveling trajectories.

Optionally, acquiring one or more fixed traveling trajectories of the vehicle according to the analysis of the plurality of historical traveling trajectories of the vehicle may include: comparing start points, end points, and/or traveling trajectories of the plurality of historical traveling trajectories, acquiring the fixed traveling trajectories according to at least two historical traveling trajectories when the comparison result shows that a similarity of the at least two historical traveling trajectories exceeds a similarity threshold. For example, the similarity of at least two historical traveling trajectories may be considered to exceed a similarity threshold when the departure place and the destination of the at least two historical traveling trajectories are the same, or the distance between the departure place and the destination of the at least two historical traveling trajectories is within a certain range. For another example, the similarity of at least two historical traveling trajectories may also be considered to exceed the similarity threshold when the departure place and destination of the at least two historical traveling trajectories are opposite to each other, i.e. the departure place of one historical traveling trajectory is the destination of the other historical traveling trajectory and the destination of the one historical traveling trajectory is the departure place of the other historical traveling trajectory. Further, optionally, when the departure place and the destination of the at least two historical traveling trajectories are the same or opposite, or the distance between the departure place and the destination of the at least two historical traveling trajectories are within a certain range, specific traveling trajectories between these historical traveling trajectories may be further compared, for example, the trajectories may be plotted into latitude and longitude two-dimensional vectors according to latitude and longitude data, respectively, and the corresponding latitude and longitude two-dimensional vectors of the trajectories may be subjected to a similarity calculation (for example, a cosine similarity calculation may be performed), thereby acquiring a fixed traveling trajectory according to the historical traveling trajectories in which the similarity between is higher.

In acquiring the fixed traveling trajectory according to the at least two historical traveling trajectories, optionally, the at least two historical traveling trajectories may be subjected to processing of averaging or weighted averaging, and the processing result is taken as the fixed traveling trajectory of the vehicle. Upon acquiring one or more fixed traveling trajectories of the vehicle, a corresponding fixed traveling trajectory model of the vehicle may be constructed for each of the one or more fixed traveling trajectories. Further, after one or more fixed traveling trajectories are acquired, the fixed traveling trajectories may be stored and compared to the current traveling trajectory of the vehicle as a fixed traveling trajectory model of the vehicle. For example, the information of the fixed traveling trajectory of the vehicle in the stored fixed traveling trajectory model may include one or more kinds of information of the vehicle's departure place, vehicle's destination, traveling trajectory, departure time, arrival time, traveling time, traveling distance, traveling date (or week information such as weekdays of the week, Saturdays/Sundays of the week, etc.), longitude and latitude data. Moreover, when the vehicle can recognize the user by, for example, the manner of user login, optionally, the fixed traveling trajectory model of the vehicle can also be classified according to the difference of the user of the vehicle and compared with the traveling trajectories of the corresponding users, respectively. Further, the fixed traveling trajectory model of the vehicle may be iterated and updated accordingly in accordance with the constant updating of the traveling trajectory of the vehicle.

In one example of the invention, the fixed traveling trajectory model of the vehicle may include a commuting trajectory model of the user from home to company or from company to home. Further, in another example, the fixed traveling trajectory model of the vehicle may further include a pickup trajectory model of the user from home to child's school or from child's school to home. In yet another example, the fixed traveling trajectory model of the vehicle may also include a periodic trajectory model of the user from ground A to ground B on certain specific days, and the like. The selection and judgment of the departure place, the destination, and the traveling trajectory for the fixed traveling trajectory model of the vehicle may be screened and determined based on historical traveling trajectories of the vehicle and different usage habits of the vehicle by the user, and are not limited herein.

After constructing the fixed traveling trajectory model of the vehicle, the vehicle navigation data and/or the vehicle traveling state may be compared with one or more fixed traveling trajectories included in the fixed traveling trajectory model of the vehicle. Alternatively, a departure place, a destination, a departure time, a traveling trajectory, and the like on which the vehicle travels, acquired from the vehicle navigation data, may be compared with one or more fixed traveling trajectories included in the fixed traveling trajectory model of the vehicle. Further, optionally, a departure place, a departure time, current traveling trajectory, and/or intended destination of the vehicle, etc., which are acquired according to the traveling state of the vehicle, may also be compared with one or more fixed traveling trajectories included in the fixed traveling trajectory model of the vehicle. For example, the latitude and longitude data based on the current traveling trajectory of the vehicle may be compared with the latitude and longitude data of each of the fixed traveling trajectories in the fixed traveling trajectory model of the vehicle, and a cosine similarity may be calculated to acquire a result of the likelihood that the vehicle traveling mode conforms to one of the fixed traveling trajectories in the fixed traveling trajectory model. Subsequently, when the comparison results in that the likelihood that the vehicle traveling mode complies with any one of the fixed traveling trajectories of the vehicle model exceeds a likelihood threshold, the vehicle traveling mode is determined to comply with the requirement of the thermal management mode.

The above manner of utilizing vehicle navigation data and/or vehicle traveling state to determine whether the vehicle traveling mode complies with the requirements of the thermal management mode is merely an example. In practical applications, the determining manner of the thermal management mode can be flexibly adjusted according to the specific traveling scenario of the vehicle and the specific requirements of the thermal management mode of the vehicle, neither of which is limited herein.

In step S 102, acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode.

Alternatively, when it is determined that the vehicle traveling mode complies with the requirement of the thermal management mode, the remaining traveling distance and/or the remaining traveling time of the vehicle may be estimated based on various kinds of information such as a place of departure, a destination, a traveling trajectory, a traffic situation on which the vehicle is driven acquired by the vehicle navigation data.

Further, optionally, the remaining traveling distance and/or the remaining traveling time of the vehicle may also be estimated from the fixed traveling trajectory of the vehicle agreed upon by the vehicle navigation data and/or the vehicle traveling state when the vehicle navigation data and/or the vehicle traveling state complies with the fixed traveling trajectory model of the vehicle.

The above ways in which the vehicle navigation data and/or the vehicle traveling state are utilized to estimate the remaining traveling distance and/or the remaining traveling time of the vehicle are merely examples. In practical applications, the estimation manner of the remaining traveling distance and/or the remaining traveling time of the vehicle can be flexibly adjusted according to the specific traveling scenario of the vehicle and the specific requirements of the thermal management mode of the vehicle, none of which is limited herein.

In step S103, thermally managing the thermal management component of the vehicle in accordance with the acquired ambient temperature, the upper temperature limit and the lower temperature limit of the thermal management component, and in combination with the estimated remaining traveling distance and/or remaining traveling time.

Optionally, the specific manner of thermal management of the vehicle may be determined according to the specific type of thermal management component of the vehicle.

In one example, thermally managing the thermal management component of the vehicle in accordance with the acquired ambient temperature, the upper temperature limit and the lower temperature limit of the thermal management component, and in combination with the estimated remaining traveling distance and/or remaining traveling time may include: thermally managing the thermal management component by adjusting the upper temperature limit and/or the lower temperature limit of the thermal management component in accordance with a relationship between the ambient temperature and the upper temperature limit and/or the lower temperature limit of the thermal management component.

For example, when the ambient temperature $T_{amb}$ is greater than the upper temperature limit $T_H$ of the thermal management component, the temperature T of the thermal management component may be further cooled according to a conventional thermal management component temperature cooling interval $[T_H, T_L]$ in combination with the lower temperature limit $T_L$ of the thermal management component. That is, when the temperature T of the thermal management component is higher than the upper temperature limit $T_H$ of the thermal management component, the cooling is started, until when $T = T_L$, the cooling is stopped. Meanwhile, the cooling power at the time of thermal management may be PID calculated according to the deviation between T and $T_L$ to adjust the cooling speed of the thermal management component.

For another example, when the ambient temperature $T_{amb}$ is less than or equal to the upper temperature limit $T_H$ of the thermal management component and greater than or equal to the lower temperature limit $T_L$ of the thermal management component, it may be considered to adjust the lower temperature limit $T_L$ of the thermal management component such that $T_L = T_{amb}$ to reduce the cooling power in thermal management and save energy consumption.

For another example, when the ambient temperature $T_{amb}$ is less than the lower temperature limit $T_L$ of the thermal management component, the upper temperature limit $T_H$ of the thermal management component and the lower temperature limit $T_L$ of the thermal management component may be adjusted to be equal such that $T_H = T_L$, such that active cooling is stopped once the temperature T of the thermal management component reaches the upper temperature limit $T_H$

of the thermal management component, fully utilizing the ambient temperature to continue to cool down, thereby further saving energy consumption.

Further, on the basis of the thermal management optimization described above, the specific manner of thermal management may also continue to be adapted in connection with the estimated remaining traveling distance and/or remaining traveling time. Optionally, thermally managing the thermal management component of the vehicle in accordance with the acquired ambient temperature, the upper temperature limit and the lower temperature limit of the thermal management component, and in combination with the estimated remaining traveling distance and/or remaining traveling time, may include further adjusting the upper temperature limit and/or the lower temperature limit of the thermal management component, and thermally managing the thermal management component, when the estimated remaining traveling distance is less than a preset distance threshold, and/or the remaining traveling time is less than a preset time threshold.

In one example, when the ambient temperature $T_{amb}$ is greater than the upper temperature limit $T_H$ of the thermal management component, and the estimated remaining traveling distance d is less than a preset distance threshold Do (e.g., 5 km), and/or the remaining traveling time T is less than a preset time threshold $T_0$ (e.g., 30 minutes), the lower temperature limit $T_L$ of the thermal management component may be further increased on the basis described above, e.g., such that $T_L = T_H$. Thereby reducing the cooling power at the time of thermal management to reduce energy consumption when the temperature T of the thermal management component is greater than the upper temperature limit $T_H$ of the thermal management component; and stopping the active cooling when the temperature T of the thermal management component is lower than the upper temperature limit $T_H$ of the thermal management component, to prevent the temperature of the cooled thermal management component from deviating too much from the ambient temperature and reduce wasted energy consumption caused by the thermal management component warming up after reaching the destination.

In another example, when the ambient temperature $T_{amb}$ is less than or equal to the upper temperature limit $T_H$ of the thermal management component and greater than or equal to the lower temperature limit $T_L$ of the thermal management component, on the basis that the lower temperature limit $T_L$ of the thermal management component is adjusted such that $T_L = T_{amb}$, the lower temperature limit $T_L$ of the thermal management component may also be further increased, e.g., such that $T_L = T_H$, when the estimated remaining traveling distance d is less than a preset distance threshold Di, e.g., 10 km, and/or the remaining traveling time T is less than a preset time threshold $T_1$, e.g., 1 hour, such that active cooling is stopped when the temperature T of the thermal management component is less than the upper temperature limit $T_H$ of the thermal management component to further reduce waste of energy consumption caused in the thermal management process.

Further, as previously described, different thermal management approaches may also be employed depending on the specific type of thermal management component. For example, where the thermal management component is a power battery of a vehicle, cooling may be performed using thermal management as described above. However, where the thermal management component is a cockpit, then other specific thermal management approaches may be employed. For example, when the estimated remaining traveling distance d is smaller than a preset distance threshold $D_2$, for example 3 km, and/or the remaining traveling time T is smaller than a preset time threshold $T_2$, for example 20 minutes, the temperature T at which the air conditioning of the cockpit is set is expressed as:

$$T = T_s \pm k(D_2 - d) \quad (1)$$

Where $T_s$ is the set temperature of the cockpit, k is a temperature coefficient of variation indicating that the set temperature of the air conditioner for adjusting the cockpit rises/falls by k Celsius degrees per kilometer when closer to the destination, and has a unit of °C/km. In one example, k may take the value 0.3-0.5. In equation (1), the symbol "+" may be taken when the cockpit air conditioner is set to refrigeration, and the symbol "-" may be taken when the cockpit air conditioner is set to heat.

The above-mentioned different specific manners of thermal management with respect to the relationship between the respective temperatures, the remaining travelling distance/time, and the different types of thermal management components are only examples, and in practical applications, any corresponding thermal management manners may be adopted according to practical application scenarios, none of which is limited herein. In addition, the above comparative relationship regarding greater than or less than between the respective temperatures may also include the case of equality between the temperatures, and is not limited here.

The method of thermal management of a vehicle according to an embodiment of the present invention can determine whether the thermal management mode is compliant by determining the vehicle traveling mode, and in the thermal management mode, a thermal management manner of a vehicle is flexibly adjusted by combining an ambient temperature, a remaining traveling distance and/or a traveling time of the vehicle, thereby reducing energy consumption and improving efficiency of thermal management of the vehicle.

Hereinafter, one specific example of a method of vehicle thermal management according to an embodiment of the present invention will be provided. In an example of an embodiment of the present invention, it is possible to perform thermal management with respect to the power battery (high-voltage battery) of the vehicle as the thermal management component of the vehicle, and to determine the thermal management mode of the vehicle in combination with the commuting trajectory model of the vehicle as the fixed traveling trajectory model of the vehicle. Fig. 2 shows an example of a hardware configuration of a whole vehicle controller according to an example of an embodiment of the present invention, in which a vehicle can perform commuting mode recognition according to a commuting trajectory model by using a whole vehicle energy control module in Fig. 2, and perform thermal management of a power battery of the vehicle using a thermal management control module. In addition, when thermal management is required for the cockpit of the vehicle, the cockpit may also be thermally managed with an air conditioning control module in the whole vehicle controller.

Specifically, firstly, it may be determined whether the vehicle traveling mode complies with the requirement of the thermal management mode according to the vehicle navigation data and/or the vehicle traveling state.

In the present example, it may be determined that the vehicle complies with the requirement of the thermal management mode when it is determined that the vehicle traveling mode complies with the commuting mode of the vehicle according to the vehicle navigation data and/or the vehicle traveling state. That is, the power battery of the vehicle may be thermally managed in a thermal management mode when the vehicle traveling mode conforms to the commuting mode.

Considering that a commuting mode of a vehicle has some inherent attributes as compared to other travel modes, including, for example, a relatively similar departure time and arrival time in the commuting mode, and a generally consistent traveling trajectory in the commuting mode, in this example, whether the vehicle conforms to the commuting mode can be determined in a variety of ways as follows.

Alternatively, whether or not the commuting mode is conformed may be determined according to vehicle navigation data input by the user through a navigation unit in the whole vehicle controller. For example, the navigation path triggered by the user by clicking on the tag or voice control may be acquired through tags formed by common addresses such as "home" and "company" previously stored by the user in the navigation unit, to determine whether the vehicle is traveling under the commuting mode. In addition, the position of the user at the time of triggering the navigation path may be acquired in combination with the GPS signal acquired through the antenna network unit of the entire vehicle controller to determine whether the navigation path triggered by the user is a travel path from "home" to "company" or from "company" to "home", thereby knowing whether the travel of the vehicle conforms to the commuting mode.

Further, optionally, whether the vehicle traveling mode is the commuting mode can also be determined by constructing a commuting trajectory model of the vehicle. In this example, a commuting trajectory model of the vehicle may first be constructed. Specifically, the longitude and latitude information of the vehicle, the vehicle speed information, and the traveling distance of the vehicle (calculated, for example, from the integration of the vehicle speed over time) may be recorded for a traveling cycle of the vehicle from the travel started to the vehicle locked in the historical case at a fixed time period (acquisition time interval of, for example, 1s, acquisition frequency of, for example, 1Hz) and stored in the entire vehicle controller in the form of a table as follows.

Table 1 Relevant data of vehicle historical traveling trajectories

|  | Travel started |  |  |  |  |  | Arrival and vehicle locked |
|---|---|---|---|---|---|---|---|
| Time | 07:32 | ... | ... | ... | ... | ... | 08:27 |
| Vehicle speed (km/h) | 0 | 45 | ... | 82 | ... | ... | 0 |
| Traveling distance (km) | 0 | ... | ... | ... | ... | ... | 21.5 |
| Latitude | 31.432 | ... | ... | ... | ... | ... | 31.378 |
| Longitude | 121.24 | ... | ... | ... | ... | ... | 121.35 |

Table 1 shows the relevant data of the vehicle historical traveling trajectories. In Table 1, the latitude and longitude information of the vehicle, the vehicle speed information and the traveling distance recorded at the time interval of 1s from the start of the vehicle traveling to the vehicle locked are recorded, and part of the specific data contents are omitted from the table and not shown.

After collecting data of a plurality of historical traveling trajectories as shown in the data in Table 1, a commuting trajectory model of the vehicle can be constructed accordingly. First, it is possible to retrieve the corresponding latitude and longitude data in all tables based on the departure place and/or destination data of the vehicle, delete irrelevant travel cycle data, and select data of historical traveling trajectories having a high probability of coincidence (e.g., coincidence between departure place and departure place, coincidence between destination and destination, coincidence between departure place and destination).

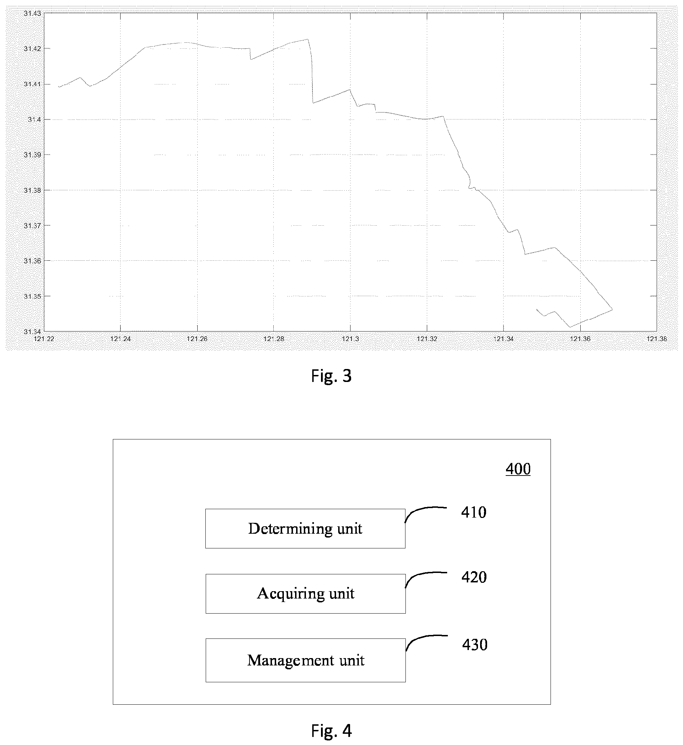

Subsequently, a historical traveling trajectory curve may be drawn with longitude as X axis and latitude as Y axis according to latitude and longitude data of the historical traveling trajectory in the selected table. Fig. 3 shows a schematic diagram of a historical traveling trajectory curve according to one example of an embodiment of the present invention. In Fig. 3, the longitude and latitude data of the vehicle acquired through the respective sampling points represents a two-dimensional vector of the historical traveling trajectory of the vehicle.

By comparing between the two-dimensional vectors of longitudes and latitudes of these historical traveling trajectories, for example by calculating a cosine similarity, the two historical traveling trajectory curves with the highest similarity between the historical traveling trajectories can be acquired as the commuting trajectory of the user.

Thereafter, for the filtered commuting trajectory, the longitude and latitude data in the corresponding stored table can be looked up in reverse, as shown in Tables 2 and 3 below, as the commuting trajectory model of the user.

Table 2 Home-company related data in commuting trajectory model

| Commuting Mode (Home-Company) | Travel started | | | | | | Arrival and vehicle locked |
|---|---|---|---|---|---|---|---|
| Time | 07:30 | ... | ... | ... | ... | ... | 08: 25 |
| Vehicle speed (km/h) | 0 | 45 | ... | 82 | ... | ... | 0 |
| Traveling distance (km) | 0 | ... | ... | ... | ... | ... | 21.5 |
| Latitude | 31.4208 | ... | ... | ... | ... | ... | 31.386 |
| Longitude | 121.25 | ... | ... | ... | ... | ... | 121.33 |

Table 3 Company-home related data in commuting trajectory model

| Commuting Mode (Company-Home) | Travel started | | | | | | Arrival and vehicle locked |
|---|---|---|---|---|---|---|---|
| Time | 17: 30 | ... | ... | ... | ... | ... | 18: 25 |
| Vehicle speed (km/h) | 0 | ... | ... | ... | ... | ... | 0 |
| Traveling distance (km) | 0 | ... | ... | ... | ... | ... | 21.5 |
| Latitude | 31.386 | ... | ... | ... | ... | ... | 31.43 |
| Longitude | 121.33 | ... | ... | ... | ... | ... | 121.25 |

Table 2 and Table 3 show respective longitude and latitude location information, daily commuting one-way distance, daily commuting time, and the like information of the home and the company in the commuting trajectory model. The specific data in the commuting trajectory model in Tables 2 and 3 may be data of one of the historical commuting trajectories, or may be an average or weighted average of data of a plurality of historical commuting trajectories, without limitation. Further, the commuting trajectory model of the vehicle may be iterated and updated accordingly in accordance with the constant updating of the commuting trajectory of the vehicle.

After the commuting trajectory model of the vehicle is constructed, the current traveling trajectory of the vehicle may be compared to the commuting trajectory model. Optionally, a place of departure, a destination, a departure time, a traveling trajectory acquired from the vehicle navigation data may be compared with a commuting trajectory model of said vehicle. Further, optionally, a place of departure, a departure time, a current traveling trajectory, and/or an expected destination, etc. acquired according to the vehicle traveling state may also be compared with the commuting trajectory model of said vehicle. For example, the vehicle's current traveling trajectory may first be compared to the latitude and longitude locations of the departure place and/or destination of the commuting trajectory model and reference may be made to whether the vehicle's departure time is within a range of commuting times. Subsequently, the longitude and latitude data according to the current traveling trajectory of the vehicle may be compared with the longitude and latitude data of the respective commuting trajectories in the commuting trajectory model of the vehicle, and a cosine similarity is calculated, to determine whether the current vehicle traveling trajectory conforms to the commuting trajectory model, and output a likelihood that the current vehicle traveling trajectory conforms to the commuting trajectory model. When the likelihood exceeds a likelihood threshold, the vehicle traveling mode is determined to conform to the commuting trajectory model, and a power battery of the vehicle may be thermally managed with the thermal management mode.

In a subsequent step, when it is determined that the vehicle traveling mode complies with the requirements of the thermal management mode, the ambient temperature and the upper and lower temperature limits of the thermal management component in the thermal management mode are acquired, and a remaining traveling distance and/or a remaining traveling time of the vehicle from the destination is estimated.

Alternatively, when the vehicle traveling mode is determined to comply with the requirement of the thermal management mode, the remaining traveling distance of the vehicle may be estimated by the expected total traveling distance and the current traveling distance, and the remaining traveling time of the vehicle may be estimated by the expected total traveling time and the current traveling time of the vehicle according to various kinds of information such as a departure place, a destination, a traveling trajectory, and a traffic situation on which the vehicle travels acquired by the vehicle navigation data.

Finally, the power battery of the vehicle may be thermally managed according to the acquired ambient temperature, the upper temperature limit and the lower temperature limit of the power battery in combination with the estimated remaining traveling distance and/or remaining traveling time.

In one example, the thermal management component may be thermally managed by adjusting an upper temperature limit and/or a lower temperature limit of the power battery according to a relationship between the ambient temperature and an upper temperature limit and/or a lower temperature limit of the power battery. Further, on the basis of the thermal management optimization described above, the specific manner of thermal management may also continue to be adapted in connection with the estimated remaining traveling distance and/or remaining traveling time. When the estimated remaining traveling distance is smaller than a preset distance threshold, and/or the remaining traveling time is smaller than a preset time threshold, the upper temperature limit and/or the lower temperature limit of the power battery may be further adjusted, and fine thermal management is performed on the power battery.

For example, when the ambient temperature $T_{amb}$ is greater than the upper temperature limit $T_H$ of the power battery, the temperature $T$ of the power battery may be further cooled according to the conventional temperature cooling interval $[T_H, T_L]$ of the power battery in combination with the lower temperature limit $T_L$ of the power battery. That is, when the temperature $T$ of the power battery is higher than the upper temperature limit $T_H$ of the thermal management member, the cooling is started, and until $T = T_L$, the cooling is stopped. Meanwhile, the cooling power at the time of thermal management may be PID calculated according to the deviation between $T$ and $T_L$ to adjust the cooling speed of the power battery. On this basis, when the estimated remaining traveling distance d is smaller than a preset distance threshold Do (for example, 5 km), and/or the remaining traveling time T is smaller than a preset time threshold $T_0$ (for example, 30 minutes), the lower temperature limit $T_L$ of the power battery may be further raised on the above-described basis, for example, such that $T_L = T_H$, thereby reducing the cooling power at the time of thermal management to reduce energy consumption when the temperature $T$ of the power battery is higher than the upper temperature limit $T_H$ of the power battery; and when the temperature $T$ of the power battery is lower than the upper temperature limit $T_H$ of the power battery, the active cooling is stopped, so as to prevent the temperature of the cooled power battery from deviating too much from the ambient temperature, reducing the waste of energy consumption caused by the temperature rise of the power battery after reaching the destination.

For another example, when the ambient temperature $T_{amb}$ is less than or equal to the upper temperature limit $T_H$ of the power battery and greater than or equal to the lower temperature limit $T_L$ of the power battery, it may be considered to adjust the lower temperature limit $T_L$ of the power battery such that $T_L = T_{amb}$ to reduce the cooling power at the time of thermal management and save energy consumption. On this basis, when the estimated remaining traveling distance d is smaller than a preset distance threshold Di (e.g., 10 km), and/or the remaining traveling time T is smaller than a preset time threshold $T_1$ (e.g., 1 hour), the lower temperature limit $T_L$ of the power battery may be further raised, for example, such that $T_L = T_H$, so that the active cooling is stopped when the temperature $T$ of the power battery is lower than the upper temperature limit $T_H$ of the power battery to further reduce the waste of energy consumption caused in the thermal management process.

For another example, when the ambient temperature $T_{amb}$ is less than the lower temperature limit $T_L$ of the power battery, the upper temperature limit $T_H$ of the power battery and the lower temperature limit $T_L$ of the power battery may be adjusted to be equal such that $T_H = T_L$, so that active cooling is stopped once the temperature $T$ of the power battery reaches the upper temperature limit $T_H$ of the power battery, making full use of the ambient temperature to continue to cool down, thereby further saving energy consumption.

Hereinafter, an apparatus for thermal management of a vehicle according to an embodiment of the present invention will be described with reference to Fig. 4. Fig. 4 shows a block diagram of an apparatus 400 for vehicle thermal management according to an embodiment of the present invention. As illustrated in Fig. 4, an apparatus 400 for vehicle thermal management includes a determining unit 410, an acquiring unit 420, and a management unit 430. The apparatus 400 for vehicle thermal management may further include other components in addition to these units, however, since these components are not relevant to the contents of the embodiments of the present invention, illustration and description thereof are omitted here. Further, since specific details of the following operations performed by the apparatus 400 for vehicle thermal management according to the embodiment of the present invention are the same as those described above with reference to Fig. 1, repeated description of the same details is omitted here in order to avoid repetition.

The thermal management component to which the apparatus 400 for vehicle thermal management in Fig. 4 is directed may be any component of a vehicle, in particular a component of a vehicle that is sensitive to temperature or that is susceptible to temperature-affected performance. For example, the thermal management component of the vehicle in the embodiment of the present invention may be various components of a power battery (high-voltage battery) of the vehicle, a cockpit of the vehicle, an engine of the vehicle, and the like, which are not limited herein.

The determining unit 410 determines whether the vehicle traveling mode complies with the requirement of the thermal management mode according to the vehicle navigation data and/or the vehicle traveling state.

In one example, when the vehicle navigation data can be acquired, it is possible that the determining unit 410 acquires various kinds of information directly through the vehicle navigation data, such as a departure place, a destination, a traveling trajectory, a traffic situation of the vehicle, etc., to further estimate a remaining traveling distance and/or a remaining traveling time of the vehicle to the destination, etc. Thus, in this case, when the remaining traveling distance and/or the remaining traveling time of the vehicle can be estimated from the vehicle navigation data, it can be determined that the vehicle traveling mode complies with the requirements of the thermal management mode.

In another example, the determining unit 410 may also determine whether the vehicle traveling mode complies with the requirement of the thermal management mode by constructing a fixed traveling trajectory model of the vehicle. Alternatively, one or more fixed traveling trajectories of the vehicle may be acquired from an analysis of a plurality of historical traveling trajectories of the vehicle, and a fixed traveling trajectory model of the vehicle may be constructed using the one or more fixed traveling trajectories.

Alternatively, the determining unit 410 acquires one or more fixed traveling trajectories of the vehicle according to the analysis of the plurality of historical traveling trajectories of the vehicle, which may include compares start points, end points, and/or traveling trajectories of the plurality of historical traveling trajectories, and acquires the fixed traveling trajectories according to at least two historical traveling trajectories when the comparison result shows that a similarity of the at least two historical traveling trajectories exceeds a similarity threshold. For example, the similarity of at least two historical traveling trajectories may be considered to exceed a similarity threshold when the departure place and the destination of the at least two historical traveling trajectories are the same, or the distance between the departure place and the destination of the at least two historical traveling trajectories is within a certain range. For another example, the similarity of at least two historical traveling trajectories may also be considered to exceed the similarity threshold when the departure place and destination of the at least two historical traveling trajectories are opposite to each other, i.e. the departure place of one historical traveling trajectory is the destination of the other historical traveling trajectory and the destination of the one historical traveling trajectory is the departure place of the other historical traveling trajectory. Further, optionally, when the departure place and the destination of the at least two historical traveling trajectories are the same or opposite, or the distance between the departure place and the destination of the at least two historical traveling trajectories are within a certain range, specific traveling trajectories between these historical traveling trajectories may be further compared, for example, the trajectories may be plotted into latitude and longitude two-dimensional vectors according to latitude and longitude data, respectively, and the corresponding latitude and longitude two-dimensional vectors of the trajectories may be subjected to a similarity calculation (for example, a cosine similarity calculation may be performed), thereby acquiring a fixed traveling trajectory according to the historical traveling trajectories in which the similarity between is higher.

In acquiring the fixed traveling trajectory according to the at least two historical traveling trajectories, optionally, the at least two historical traveling trajectories may be subjected to processing of averaging or weighted averaging, and the processing result is taken as the fixed traveling trajectory of the vehicle. Upon acquiring one or more fixed traveling trajectories of the vehicle, a corresponding fixed traveling trajectory model of the vehicle may be constructed for each of the one or more fixed traveling trajectories. Further, after one or more fixed traveling trajectories are acquired, the fixed traveling trajectories may be stored and compared to the current traveling trajectory of the vehicle as a fixed traveling trajectory model of the vehicle. For example, the information of the fixed traveling trajectory of the vehicle in the stored fixed traveling trajectory model may include one or more kinds of information of the vehicle's departure place, vehicle's destination, traveling trajectory, departure time, arrival time, traveling time, traveling distance, traveling date (or week information such as weekdays of the week, Saturdays/Sundays of the week, etc.), longitude and latitude data. Moreover, when the vehicle can recognize the user by, for example, the manner of user login, optionally, the fixed traveling trajectory model of the vehicle can also be classified according to the difference of the user of the vehicle and compared with the traveling trajectories of the corresponding users, respectively. Further, the fixed traveling trajectory model of the vehicle may be iterated and updated accordingly in accordance with the constant updating of the traveling trajectory of the vehicle.

In one example of the invention, the fixed traveling trajectory model of the vehicle may include a commuting trajectory model of the user from home to company or from company to home. Further, in another example, the fixed traveling trajectory model of the vehicle may further include a pickup trajectory model of the user from home to child's school or from child's school to home. In yet another example, the fixed traveling trajectory model of the vehicle may also include a periodic trajectory model of the user from ground A to ground B on certain specific days, and the like. The selection and judgment of the departure place, the destination, and the traveling trajectory for the fixed traveling trajectory model of the vehicle may be screened and determined based on historical traveling trajectories of the vehicle and different usage habits of the vehicle by the user, and are not limited herein.

After the determining unit 410 constructs the fixed traveling trajectory model of the vehicle, the vehicle navigation data and/or the vehicle traveling state may be compared with one or more fixed traveling trajectories included in the fixed traveling trajectory model of the vehicle. Alternatively, a departure place, a destination, a departure time, a traveling trajectory, and the like on which the vehicle travels, acquired from the vehicle navigation data, may be compared with one or more fixed traveling trajectories included in the fixed traveling trajectory model of the vehicle. Further, optionally, a departure place, a departure time, current traveling trajectory, and/or intended destination of the vehicle, etc., which are acquired according to the traveling state of the vehicle, may also be compared with one or more fixed traveling trajectories included in the fixed traveling trajectory model of the vehicle. For example, the latitude and longitude data based on the current traveling trajectory of the vehicle may be compared with the latitude and longitude data of each of the fixed traveling trajectories in the fixed traveling trajectory model of the vehicle, and a cosine similarity may be calculated to acquire a result of the likelihood that the vehicle traveling mode conforms to one of the fixed traveling trajectories in the fixed traveling trajectory model. Subsequently, when the comparison results in that the likelihood that the vehicle traveling mode complies with any one of the fixed traveling trajectories of the vehicle model exceeds a likelihood threshold, the vehicle traveling mode is determined to comply with the requirement of the thermal management mode.

The above manner of utilizing vehicle navigation data and/or vehicle traveling state to determine whether the vehicle traveling mode complies with the requirements of the thermal management mode is merely an example. In practical applications, the determining manner of the thermal management mode can be flexibly adjusted according to the specific traveling scenario of the vehicle and the specific requirements of the thermal management mode of the vehicle, neither of which is limited herein.

The acquiring unit 420 acquires an ambient temperature and an upper temperature limit and a lower temperature limit of the thermal management component in the thermal management mode and estimates a remaining traveling distance and/or a remaining traveling time of the vehicle from the destination when the vehicle traveling mode is determined to comply with the requirements of the thermal management mode.

Alternatively, the acquiring unit 420 may estimate a remaining traveling distance and/or a remaining traveling time of the vehicle based on various pieces of information such as a place of departure, a destination, a traveling trajectory, and a traffic situation on which the vehicle travels acquired by the vehicle navigation data when the vehicle traveling mode is determined to comply with the requirements of the thermal management mode.

Further, optionally, the acquiring unit 420 may also estimate the remaining traveling distance and/or the remaining traveling time of the vehicle according to the fixed traveling trajectory of the vehicle coincided by the vehicle navigation data and/or the vehicle traveling state when the vehicle navigation data and/or the vehicle traveling state complies with the fixed traveling trajectory model of the vehicle.

The above ways in which the vehicle navigation data and/or the vehicle traveling state are utilized to estimate the remaining traveling distance and/or the remaining traveling time of the vehicle are merely examples. In practical applications, the estimation manner of the remaining traveling distance and/or the remaining traveling time of the vehicle can be flexibly adjusted according to the specific traveling scenario of the vehicle and the specific requirements of the thermal management mode of the vehicle, none of which is limited herein.

The management unit 430 thermally manages the thermal management components of the vehicle according to the acquired ambient temperature, the upper and lower temperature limits of the thermal management components, in combination with the estimated remaining traveling distance and/or remaining traveling time.

Alternatively, the management unit 430 may determine a specific thermal management manner of the vehicle according to a specific type of thermal management component of the vehicle.

In one example, the management unit 430 thermally manages a thermal management component of the vehicle according to the acquired ambient temperature, an upper temperature limit and a lower temperature limit of the thermal management component, in combination with the estimated remaining traveling distance and/or remaining traveling time, which may include thermally manages the thermal management component by adjusting an upper temperature limit and/or a lower temperature limit of the thermal management component according to a relationship between the ambient temperature and an upper temperature limit and/or a lower temperature limit of the thermal management component.

For example, when the ambient temperature $T_{amb}$ is greater than the upper temperature limit $T_H$ of the thermal management component, the management unit 430 may further cool the temperature T of the thermal management component may be further cooled according to a conventional thermal management component temperature cooling interval $[T_H, T_L]$ in combination with the lower temperature limit $T_L$ of the thermal management component. That is, when the temperature T of the thermal management component is higher than the upper temperature limit $T_H$ of the thermal management component, the cooling is started, until when $T = T_L$, the cooling is stopped. Meanwhile, the cooling power at the time of thermal management may be PID calculated according to the deviation between T and $T_L$ to adjust the cooling speed of the thermal management component.

For another example, when the ambient temperature $T_{amb}$ is less than or equal to the upper temperature limit $T_H$ of the thermal management component and greater than or equal to the lower temperature limit $T_L$ of the thermal management component, the management unit 430 may then consider adjusting the lower temperature limit $T_L$ of the thermal management component such that $T_L = T_{amb}$ to reduce the cooling power in thermal management and save energy consumption.

For another example, when the ambient temperature $T_{amb}$ is less than the lower temperature limit $T_L$ of the thermal management component, the management unit 430 may adjust the upper temperature limit $T_H$ of the thermal management component and the lower temperature limit $T_L$ of the thermal management component to be equal, such that $T_H = T_L$, such that active cooling is stopped once the temperature T of the thermal management component reaches the upper temperature limit $T_H$ of the thermal management component, fully utilizing the ambient temperature to continue to cool down, thereby further saving energy consumption.

Further, on the basis of the thermal management optimization described above, the management unit 430 may also continue to adapt the specific manner of thermal management in connection with the estimated remaining traveling distance and/or remaining traveling time. Optionally, thermally managing the thermal management component of the vehicle in accordance with the acquired ambient temperature, the upper temperature limit and the lower temperature limit of the thermal management component, and in combination with the estimated remaining traveling distance and/or remaining traveling time, may include further adjusting the upper temperature limit and/or the lower temperature limit of the thermal management component, and thermally managing the thermal management component, when the estimated remaining traveling distance is less than a preset distance threshold, and/or the remaining traveling time is less than a preset time threshold.

In one example, when the ambient temperature $T_{amb}$ is greater than the upper temperature limit $T_H$ of the thermal management component, and the estimated remaining traveling distance d is less than a preset distance threshold Do (e.g., 5 km), and/or the remaining traveling time T is less than a preset time threshold $T_0$ (e.g., 30 minutes), the management unit 430 may further increase the lower temperature limit $T_L$ of the thermal management component on the basis described above, e.g., such that $T_L = T_H$. Thereby reducing the cooling power at the time of thermal management to reduce energy consumption when the temperature T of the thermal management component is greater than the upper temperature limit $T_H$ of the thermal management component; and stopping the active cooling when the temperature T of the thermal management component is lower than the upper temperature limit $T_H$ of the thermal management component, to prevent the temperature of the cooled thermal management component from deviating too much from the ambient temperature and reduce wasted energy consumption caused by the thermal management component warming up after reaching the destination.

In another example, when the ambient temperature $T_{amb}$ is less than or equal to the upper temperature limit $T_H$ of the thermal management component and greater than or equal to the lower temperature limit $T_L$ of the thermal management component, on the basis that the lower temperature limit $T_L$ of the thermal management component is adjusted such that $T_L = T_{amb}$, the management unit 430 may also further increase the lower temperature limit $T_L$ of the thermal management component, e.g., such that $T_L = T_H$, when the estimated remaining traveling distance d is less than a preset distance threshold Di, e.g., 10 km, and/or the remaining traveling time T is less than a preset time threshold $T_1$, e.g., 1 hour, such that active cooling is stopped when the temperature T of the thermal management component is less than the upper temperature limit $T_H$ of the thermal management component to further reduce waste of energy consumption caused in the thermal management process.

Further, as previously described, the management unit 430 may also employ different ways of thermal management depending on the specific type of thermal management component. For example, where the thermal management component is a power battery of a vehicle, the management unit 430 may employ thermal management as described above for cooling. However, when the thermal management component is a cockpit, the management unit 430 may employ other specific thermal management approaches. For example, when the estimated remaining traveling distance d is smaller than a preset distance threshold $D_2$, for example 3 km, and/or the remaining traveling time T is smaller than a preset time threshold $T_2$, for example 20 minutes, the temperature T at which the air conditioning of the cockpit is set is expressed as formula (1), where $T_s$ is the set temperature of the cockpit, k is a temperature coefficient of variation indicating that the set temperature of the air conditioner for adjusting the cockpit rises/falls by k Celsius degrees per kilometer when closer to the destination, and has a unit of °C/km. In one example, k may take the value 0.3-0.5. In equation (1), the symbol "+" may be taken when the cockpit air conditioner is set to refrigeration, and the symbol "-" may be taken when the cockpit air conditioner is set to heat.

The above-mentioned different specific manners of thermal management with respect to the relationship between the respective temperatures, the remaining travelling distance/time, and the different types of thermal management components are only examples, and in practical applications, any corresponding thermal management manners may be adopted according to practical application scenarios, none of which is limited herein. In addition, the above comparative relationship regarding greater than or less than between the respective temperatures may also include the case of equality between the temperatures, and is not limited here.

An apparatus for thermal management of a vehicle according to an embodiment of the present invention can determine whether the thermal management mode is compliant by determining the vehicle traveling mode, and in the thermal management mode, a thermal management manner of a vehicle is flexibly adjusted by combining an ambient temperature, a remaining traveling distance and/or a traveling time of the vehicle, thereby reducing energy consumption and improving efficiency of thermal management of the vehicle.

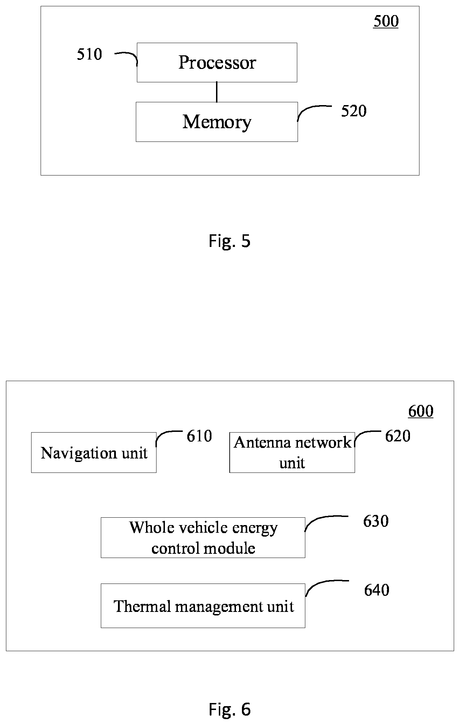

Hereinafter, an apparatus for thermal management of a vehicle according to an embodiment of the present invention will be described with reference to Fig. 5. Fig. 5 shows a block diagram of an apparatus 500 for vehicle thermal management according to an embodiment of the present invention. As shown in Fig. 5, the apparatus 500 may be a computer or server.

As shown in Fig. 5, the apparatus 500 for vehicle thermal management includes one or more processors 510 and memory 520, and of course, may include, among other things, input devices, output devices (not shown), etc., which may be interconnected by a bus system and/or other form of connection mechanism. It should be noted that the components and structure of the apparatus 500 for vehicle thermal management shown in Fig. 5 are merely exemplary and not limiting, and the apparatus 500 for vehicle thermal management may have other components and structures as desired.

The processor 510 may be a central processing unit (CPU) or other form of processing unit having data processing capability and/or instruction execution capability, and may utilize computer program instructions stored in the memory 520 to perform desired functions, which may include: determining whether a vehicle traveling mode complies with requirements of a thermal management mode based on vehicle navigation data and/or a vehicle traveling state; acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode; thermally managing the thermal management component of the vehicle in accordance with the acquired ambient temperature, the upper temperature limit and the lower temperature limit of the thermal management component, and in combination with the estimated remaining traveling distance and/or remaining traveling time.

Memory 520 may include one or more computer program products, which may include computer readable storage media in various forms, such as volatile memory and/or non-volatile memory. One or more computer program instructions may be stored thereon, which the processor 510 may execute to implement the functions of the apparatus for vehicle thermal management of the embodiments of the present invention described above and/or other desired functions, and/or may perform the method for vehicle thermal management according to the embodiments of the present invention. Various application programs and various data may also be stored in the computer readable storage medium.

In the following, a computer-readable storage medium according to an embodiment of the present invention is described, having computer program instructions stored thereon, wherein the computer program instructions, when executed by a processor, implement the following steps: determining whether a vehicle traveling mode complies with a requirement of a thermal management mode according to vehicle navigation data and/or a vehicle traveling state; acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode; thermally managing the thermal management component of the vehicle in accordance with the acquired ambient temperature, the upper temperature limit and the lower temperature limit of the thermal management component, and in combination with the estimated remaining traveling distance and/or remaining traveling time.

Hereinafter, an apparatus for thermal management of a vehicle according to an embodiment of the present invention will be described with reference to Fig. 6. Fig. 6 shows a block diagram of an apparatus 600 for vehicle thermal management according to an embodiment of the present invention. As shown in Fig. 6, an apparatus 600 of vehicle thermal management may include: a navigation unit 610 configured to acquire vehicle navigation data; An antenna network unit 620 configured to acquire a vehicle traveling state; A whole vehicle energy control module 630, including a mode recognition unit, configured to determine whether a vehicle traveling mode complies with requirements of a thermal management mode according to vehicle navigation data and/or vehicle traveling state; and, the whole vehicle energy control module 630 is further configured to, when the mode recognition unit determines that the vehicle traveling mode complies with the requirement of the thermal management mode, acquire an ambient temperature and an upper temperature limit and a lower temperature limit of the thermal management component in the thermal management mode, and estimate a remaining traveling distance and/or a remaining traveling time of the vehicle from the destination; A thermal management unit 640 configured to thermally manage the thermal management components of the vehicle based on the ambient temperature acquired by the whole vehicle energy control module, the upper temperature limit and the lower temperature limit of the thermal management components, and the estimated remaining traveling distance and/or remaining traveling time. In addition to these units, the apparatus 600 for vehicle thermal management may further include other components, however, since these components are not relevant to the contents of the embodiments of the present invention, illustration and description thereof are omitted here. Further, since the specific details of the operations performed by the apparatus 600 for vehicle thermal management according to the embodiment of the present invention are the same as those described above with reference to Fig. 1, they will not be repeated here.

Of course, the above-described specific embodiments are only examples and not limitations, and those skilled in the art can combine and combine some steps and devices from the various embodiments described separately above according to the idea of the present invention to achieve the effects of the present invention, and such combined and combined embodiments are also included in the present invention, and such combinations and combinations are not described herein at one time.

Note that the advantages, advantages, effects and the like mentioned in the present invention are only examples and not limitations, and these advantages, advantages, effects and the like cannot be regarded as necessarily possessed by the various embodiments of the present invention. Moreover, the foregoing specific details have been presented for purposes of illustration and understanding only, and are not intended to be limiting, and it is not intended that the invention be limited to the specific details that must be employed to practice the invention.

The block diagrams of the devices, apparatuses, devices, systems referred to in the present disclosure are merely illustrative examples and are not intended to require or imply that the connections, arrangements, configurations must be made in the manner shown in the block diagrams. These devices, apparatuses, devices, systems may be connected, arranged, configured in any manner, as would be recognized by one skilled in the art. Words such as "comprising", "including", "having" and the like are open-ended words, meaning "including but not limited to" and are used interchangeably therewith. As used herein, the terms "or" and "and" mean, and are used interchangeably with, the term "and/or" unless the context clearly dictates otherwise. As used herein, the term "such as" means, and is used interchangeably with, the phrase "such as but not limited to".

The step flow diagrams in the present disclosure and the above method descriptions are merely illustrative examples and are not intended to require or imply that the steps of various embodiments must be performed in the order presented. As will be appreciated by one of skill in the art the order of steps in the above embodiments may be performed in any order. Words such as "thereafter", "then", "next", etc. are not intended to limit the order of the steps; these words are simply used to guide the reader through the description of the methods. Further, any reference to an element in the singular, for example, using the articles "a", "an" or "the" is not to be construed as limiting the element to the singular.

In addition, the steps and devices of the various embodiments herein are not limited to being carried out in a certain embodiment, and in fact, a relevant part of the steps and part of the devices of the various embodiments herein may be combined according to the concept of the present invention to conceive of new embodiments, which are also included in the scope of the present invention.

The individual operations of methods described above may be performed by any suitable means capable of performing the corresponding functions. The means may include various hardware and/or software components and/or modules, including, but not limited to a circuit, an application specific integrated circuit (ASIC), or processor.

The various illustrative logical blocks, modules, and circuits described may be implemented or performed with a general purpose processor, a digital signal processor (DSP), an ASIC, a field programmable gate array signal (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of tangible storage medium. Some examples of storage media that may be used include random access memory (RAM), read-only memory (ROM), flash memory, EPROM memory, EEPROM memory, registers, a hard disk, a removable disk, a CD-ROM and so forth. A storage medium may be coupled to the processor such that the processor can read information from, and write information to, the storage medium. In the alternative, the storage medium may be integral to the processor. A software module may be a single instruction, or many instructions, and may be distributed over several different code segments, among different programs, and across multiple storage media.

The methods of the invention herein comprise one or more actions for achieving the described method. The methods and/or actions may be interchanged with one another without departing from the scope of the claims. In other words, unless a specific order of actions is specified, the order and/or use of specific actions may be modified without departing from the scope of the claims.

The functions described may be implemented in hardware, software, firmware, or any combination thereof. If implemented in software, the functions may be stored as one or more instructions on a tangible computer-readable medium. Storage media may be any available tangible media that can be accessed by a computer. By way of example, and not limitation, such computer-readable media can comprise RAM, ROM, EEPROM, CD-ROM or other optical disk storage, magnetic disk storage or other magnetic storage devices, or any other tangible medium that can be used to carry or store desired program code in the form of instructions or data structures and that can be accessed by a computer. Disk (disc), as used herein, includes compact disc (CD), laser disc, optical disc, digital versatile disc (DVD), floppy disk and Blu-ray disc.

Thus, the computer program product may perform the operations presented herein. For example, such a computer program product may be a computer readable tangible medium having instructions tangibly stored (and/or encoded) thereon, the instructions being executable by one or more processors to perform the operations described herein. The computer program product may comprise packaged materials.

Software or instructions may also be transmitted over a transmission medium. For example, software may be transmitted from a website, server, or other remote source using a transmission medium such as a coaxial cable, fiber optic cable, twisted pair, digital subscriber line (DSL), or wireless technologies such as infrared, radio, or microwave.

Further, modules and/or other appropriate means for performing the methods and techniques described herein can be downloaded and/or otherwise acquired by a user terminal and/or base station as appropriate. For example, such a device can be coupled to a server to facilitate the transfer of means for performing the methods described herein. Alternatively, various methods described herein can be provided via storage means (e.g., RAM, ROM, a physical storage medium such as a CD or floppy disk, etc.), such that a user terminal and/or base station can acquire the various methods upon coupling or providing the storage means to the device. Moreover, any other suitable technique for providing the methods and techniques described herein to a device can be utilized.

Other examples and implementations are within the scope and spirit of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one" of indicates a disjunctive list such that, for example, a list of "at least one of A, B, or C "means A or B or C, or AB or AC or BC, or ABC (i.e., A and B and C). Moreover, the word "exemplary" does not imply that the described example is preferred or advantageous over other examples.

Various changes, substitutions and alterations to the technology described herein can be made without departing from the technology of the teachings as defined by the appended claims. Moreover, the scope of the claims of the present invention is not limited to the specific aspects of the process, machine, manufacture, composition of matter, means, methods, and actions described above. Processes, machines, manufacture, compositions of matter, means, methods, or actions, presently existing or later to be developed, that perform substantially the same function or achieve substantially the same result as the corresponding aspects described herein may be utilized. Accordingly, the appended claims include within their scope such processes, machines, manufacture, compositions of matter, means, methods, or actions.

The above description of the inventive aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

The foregoing description has been presented for purposes of illustration and description. Furthermore, this description is not intended to limit embodiments of the present invention to the form of the invention herein. While several example aspects and embodiments have been discussed above, those of skill in the art will recognize certain variations, modifications, changes, additions and sub-combinations thereof.

**Claims**

1.  A method of vehicle thermal management, comprising:

    determining whether a vehicle traveling mode complies with a requirement of a thermal management mode according to vehicle navigation data and/or a vehicle traveling state;
    acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode;
    thermally managing the thermal management component of the vehicle in accordance with the acquired ambient temperature, the upper temperature limit and the lower temperature limit of the thermal management component, and in combination with the estimated remaining traveling distance and/or remaining traveling time.

2.  The method of claim 1, wherein determining whether the vehicle traveling mode complies with the requirement of the thermal management mode according to the vehicle navigation data and/or the vehicle traveling state comprises:
    when the remaining traveling distance and/or the remaining traveling time of the vehicle from the destination can be estimated according to the vehicle navigation data, determining that the vehicle traveling mode complies with the requirement of the thermal management mode.

3.  The method of claim 1, wherein the method further comprises:
    acquiring one or more fixed traveling trajectories of the vehicle according to an analysis of a plurality of historical traveling trajectories of the vehicle, constructing a corresponding fixed traveling trajectory model of the vehicle for each of the one or more fixed traveling trajectories.

4. The method of claim 3, wherein acquiring one or more fixed traveling trajectories of the vehicle according to the analysis of a plurality of historical traveling trajectories of the vehicle comprises:
comparing start points, end points, and/or traveling trajectories of the plurality of historical traveling trajectories, when a comparison result shows that a similarity of at least two historical traveling trajectories exceeds a similarity threshold, acquiring the fixed traveling trajectories according to the at least two historical traveling trajectories.

5. The method of claim 3, wherein determining whether the vehicle traveling mode complies with the requirement of the thermal management mode according to the vehicle navigation data and/or the vehicle traveling state comprises:
comparing the vehicle navigation data and/or the vehicle traveling state with the fixed traveling trajectory model of the vehicle, determining that the vehicle traveling mode complies with the requirement of the thermal management mode when a likelihood of the vehicle navigation data and/or the vehicle traveling state complying with the fixed traveling trajectory model of the vehicle exceeds a likelihood threshold.

6. The method as claimed in claim 1, wherein thermally managing the thermal management component of the vehicle in accordance with the acquired ambient temperature, the upper temperature limit and the lower temperature limit of the thermal management component, and in combination with the estimated remaining traveling distance and/or remaining traveling time comprises:
when the ambient temperature is greater than the upper temperature limit of the thermal management component, starting cooling when the temperature of the thermal management component is higher than the upper temperature limit of the thermal management component, and stopping cooling when the temperature of the thermal management component is cooled to the lower temperature limit of the thermal management component.

7. The method as claimed in claim 1, wherein thermally managing the thermal management component of the vehicle in accordance with the acquired ambient temperature, the upper temperature limit and the lower temperature limit of the thermal management component, and in combination with the estimated remaining traveling distance and/or remaining traveling time comprises:
adjusting the lower temperature limit of the thermal management component to the ambient temperature when the ambient temperature is less than or equal to the upper temperature limit of the thermal management component and greater than or equal to the lower temperature limit of the thermal management component, starting cooling the thermal management component when the temperature of the thermal management component is greater than the upper temperature limit of the thermal management component, and stopping cooling the thermal management component when the temperature of the thermal management component is cooled to the ambient temperature.

8. The method as claimed in claim 1, wherein thermally managing the thermal management component of the vehicle in accordance with the acquired ambient temperature, the upper temperature limit and the lower temperature limit of the thermal management component, and in combination with the estimated remaining traveling distance and/or remaining traveling time comprises:
adjusting the upper temperature limit of the thermal management component to be equal to the lower temperature limit of the thermal management component when the ambient temperature is less than the lower temperature limit of the thermal management component, starting cooling the thermal management component when the temperature of the thermal management component is greater than the upper temperature limit of the thermal management component, and stopping cooling the thermal management component when the temperature of the thermal management component is cooled to the upper temperature limit of the thermal management component.

9. The method as claimed in claim 1, wherein thermally managing the thermal management component of the vehicle in accordance with the acquired ambient temperature, the upper temperature limit and the lower temperature limit of the thermal management component, and in combination with the estimated remaining traveling distance and/or remaining traveling time further comprises:
when the estimated remaining traveling distance is less than a preset distance threshold, and/or the remaining traveling time is less than a preset time threshold, further adjusting the upper temperature limit and/or the lower temperature limit of the thermal management component, and thermally managing the thermal management component.

10. The method of claim 1, wherein
the thermal management component is a power battery and/or a cockpit.

**11.** An apparatus for vehicle thermal management, comprising:

a determining unit configured to determine whether a vehicle traveling mode complies with a requirement of a thermal management mode according to vehicle navigation data and/or a vehicle traveling state;

an acquiring unit configured to acquire an ambient temperature and an upper temperature limit and a lower temperature limit of a thermal management component in the thermal management mode, and estimate a remaining traveling distance and/or a remaining traveling time of a vehicle from a destination when the vehicle traveling mode is determined to comply with the requirement of the thermal management mode;

a management unit configured to thermally manage the thermal management component of the vehicle in accordance with the acquired ambient temperature, the upper temperature limit and the lower temperature limit of the thermal management component, and in combination with the estimated remaining traveling distance and/or remaining traveling time.

**12.** An apparatus for vehicle thermal management, comprising:

a memory having computer instructions stored thereon; and
a processor,
wherein the instructions, when executed by the processor, cause the processor to perform steps of:

determining whether a vehicle traveling mode complies with a requirement of a thermal management mode according to vehicle navigation data and/or a vehicle traveling state;

acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode;

thermally managing the thermal management component of the vehicle in accordance with the acquired ambient temperature, the upper temperature limit and the lower temperature limit of the thermal management component, and in combination with the estimated remaining traveling distance and/or remaining traveling time.

**13.** A non-transitory computer-readable storage medium storing instructions causing a processor to perform steps of:

determining whether a vehicle traveling mode complies with a requirement of a thermal management mode according to vehicle navigation data and/or a vehicle traveling state;

acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode;

thermally managing the thermal management component of the vehicle in accordance with the acquired ambient temperature, the upper temperature limit and the lower temperature limit of the thermal management component, and in combination with the estimated remaining traveling distance and/or remaining traveling time.

**14.** An apparatus for vehicle thermal management, comprising:

a navigation unit configured to acquire vehicle navigation data;
an antenna network unit configured to acquire a vehicle traveling state;
a whole vehicle energy control module, comprising a mode recognition unit, configured to determine whether a vehicle traveling mode complies with a requirement of a thermal management mode according to the vehicle navigation data and/or the vehicle traveling state; and the whole vehicle energy control module is further configured to acquire an ambient temperature and an upper temperature limit and a lower temperature limit of a thermal management component in the thermal management mode, and estimate a remaining traveling distance and/or a remaining traveling time of a vehicle from a destination when the mode recognition unit determines that the vehicle traveling mode complies with the requirement of the thermal management mode;
a thermal management unit configured to thermally manage the thermal management component of the vehicle in accordance with the ambient temperature, the upper temperature limit and the lower temperature limit of the thermal management component acquired by the whole vehicle energy control module, and in combination with the estimated remaining traveling distance and/or remaining traveling time.

| S101 | Determining whether a vehicle traveling mode complies with a requirement of a thermal management mode according to vehicle navigation data and/or a vehicle traveling state |

↓

| S102 | Acquiring an ambient temperature and an upper temperature limit and a lower temperature limit of a thermal management component in the thermal management mode, and estimating a remaining traveling distance and/or a remaining traveling time of a vehicle from a destination when the vehicle traveling mode is determined to comply with the requirement of the thermal management mode |

S103

↓

Thermally managing the thermal management component of the vehicle in accordance with the acquired ambient temperature, the upper temperature limit and the lower temperature limit of the thermal management component, and in combination with the estimated remaining traveling distance and/or remaining traveling time

Fig. 1

| navigation unit | | Commuting mode recognition | Thermal management control module | High pressure air conditioner |
| Entertainment system unit | | Whole vehicle energy control module | Air conditioning control module | High pressure heating module |

Antenna network unit

High voltage battery control unit

Whole vehicle controller

Fig. 2

Fig. 3

Fig. 4

500

510 — Processor

Memory — 520

Fig. 5

600

Navigation unit — 610

Antenna network unit — 620

Whole vehicle energy control module — 630

Thermal management unit — 640

Fig. 6

Europäisches
Patentamt

European
Patent Office

Office européen
des brevets

# EUROPEAN SEARCH REPORT

**Application Number**

EP 24 19 9718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/127005 A1 (CHEN XINWEI [CN] ET AL) 27 April 2023 (2023-04-27) | 1-8, 10-14 | INV. B60L58/24 |
| Y | * paragraphs [0034], [0098] - [0112] * ----- | 9 | |
| Y | US 2023/048344 A1 (LEE JOONG WOO [KR] ET AL) 16 February 2023 (2023-02-16) * paragraphs [0040] - [0056], [0071] * ----- | 9 | |

**TECHNICAL FIELDS SEARCHED (IPC)**

B60L

The present search report has been drawn up for all claims

| Place of search | Date of completion of the search | Examiner |
|---|---|---|
| The Hague | 24 January 2025 | Bellatalla, Filippo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9718

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2025

| Patent document cited in search report | | Publication date | Patent family member(s) | | Publication date |
|---|---|---|---|---|---|
| US 2023127005 | A1 | 27-04-2023 | EP | 4194236 A1 | 14-06-2023 |
| | | | JP | 7572595 B2 | 24-10-2024 |
| | | | JP | 2023550860 A | 06-12-2023 |
| | | | KR | 20230062789 A | 09-05-2023 |
| | | | US | 2023127005 A1 | 27-04-2023 |
| US 2023048344 | A1 | 16-02-2023 | CN | 115703380 A | 17-02-2023 |
| | | | EP | 4134267 A1 | 15-02-2023 |
| | | | KR | 20230025291 A | 21-02-2023 |
| | | | US | 2023048344 A1 | 16-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311182749